Europäisches Patentamt

(19) European Patent Office

Office européen des brevets

(11) **EP 1 343 337 B1**

(12) **EUROPEAN PATENT SPECIFICATION**

(45) Date of publication and mention
of the grant of the patent:
**01.06.2005 Bulletin 2005/22**

(51) Int Cl.[7]: **H04Q 7/36**

(21) Application number: **02254382.1**

(22) Date of filing: **24.06.2002**

(54) **A method and system for interference-based dynamic frequency channel allocation in a telecommunications network**

Verfahren und Vorrichtung für eine Interferenz basierende dynamische Frequenzkanalzuweisung in einem Telekommunikationsnetzwerk

Méthode et système pour l'allocation dynamique de canal de fréquence basé sur l'interférence dans un réseau de télécommunication

(84) Designated Contracting States:
**DE FR GB**

(30) Priority: **06.03.2002 GB 0205283**

(43) Date of publication of application:
**10.09.2003 Bulletin 2003/37**

(73) Proprietor: **LUCENT TECHNOLOGIES INC.
Murray Hill, New Jersey 07974-0636 (US)**

(72) Inventors:
 • **Ho, Lester Tse Wee
  London E3 5AX (GB)**
 • **Pitts, Jonathan Michael
  London SE3 8QW (GB)**
 • **Samuel, Louis Gwyn
  Swindon, Wiltshire SN5 5DQ (GB)**

(74) Representative: **Sarup, David Alexander et al
Lucent Technologies UK Limited,
5 Mornington Road
Woodford Green, Essex IG8 OTU (GB)**

(56) References cited:
   **EP-A- 0 941 003          US-A- 5 157 709**

 • **VUCETIC J: "IMPLEMENTATION AND PERFORMANCE ANALYSIS OF MULTI-ALGORITHM DYNAMIC CHANNEL ALLOCATION IN A WIDEBAND CELLULAR NETWORK" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. 3, 23 June 1996 (1996-06-23), pages 1270-1274, XP000625016 ISBN: 0-7803-3251-2**
 • **BORGONOVO F ET AL: "Performance of a dynamic channel allocation technique based on signal strength measures" VEHICULAR TECHNOLOGY CONFERENCE, 1998. VTC 98. 48TH IEEE OTTAWA, ONT., CANADA 18-21 MAY 1998, NEW YORK, NY, USA,IEEE, US, 18 May 1998 (1998-05-18), pages 1385-1389, XP010287938 ISBN: 0-7803-4320-4**

## Description

## Technical Field

The present invention relates to a method of allocating channels to base stations in a telecommunications network for communications with mobile user terminals, and a telecommunications network comprising base stations for communications with mobile user terminals,

## Background of the Invention

In cellular radio networks using frequency division multiple access methods, each mobile communicates with a fixed base station via a radio channel. Network operators are allocated a limited number of radio channels to use, which restricts the number of mobiles that can be operative. In order to increase the number of mobiles that can be used, network operators rely on intelligent allocation and reuse of channels throughout a coverage region. The reuse of channels, however, gives rise to the problem of co-channel interference, which is the interference caused by other mobiles using the same channel. Because of this, the allocation of the channels is made in such a way so that the mobiles using the same channel must be separated from one another by sufficient distances that the interference levels are kept within tolerable levels. The challenge of meeting the users' demands on the network whilst keeping the interference levels acceptable is made more difficult by the dynamic nature of the demand. Unexpected fluctuations of demand at different times of the day can make fixed channel allocation plans fail to give an acceptable quality of service, making the use of dynamic channel allocation more attractive.

A centralized dynamic channel allocation scheme called Maximum Packing (MP) was proposed in Everitt, D.; Manfield, D., "Performance analysis of cellular mobile communication systems with dynamic channel assignment" Selected Areas in Communications, IEEE Journal on , vol.7, no.8 , Oct. 1989 pp: 1172-1180, and a scheme called Compact Pattern Based Dynamic Channel Assignment (CP-based DCA) is presented in Yeung, K.L, Yum, T.-S.P, "Compact pattern based dynamic channel assignment for cellular mobile systems" Vehicular Technology, IEEE Transactions on , vol. 43 no. 4 , Nov. 1994 pp. 892 -896. The centralized dynamic channel allocation schemes require system-wide information and the complexity of searching all the possible reallocations is difficult computationally. While Compact Pattern Based Dynamic Channel Assignment (CP-based DCA) scheme reduces the search complexity and limits the number of channel reassignments compared with other centralized schemes, it still has a high centralized overhead.

The increasing complexity and size of telecommunications networks today have resulted in the shift from centralised control towards the use of distributed self-organising systems in networks. This approach has made networks more robust, scalable and rapidly deployed. These self-organising systems rely on the behaviour of its individual components to result in a useful overall global behaviour, which is sometimes difficult to quantify and evaluate. Distributed channel allocation schemes are presented in I, C-L, Chao, P.H., "Local Packing- Distributed Dynamic Channel Allocation at Cellular Base Station," IEEE GLOBECOM 1993, and Y. Furuya, Y. Akaiwa, "Channel segregation, a distributed adaptive channel allocation scheme for mobile communication-systems", IEICE Trans. Commun. Electron. Inform. Syst., vol.74, no.6, pp. 1531-1537, 1991.

As identified in Grover W.D., "Self-organizing Broad-Band Transport Networks", Proceedings of the IEEE, volume 85, no. 10, pp. 1582-1611, Oct 1997, the ability of self-organisation is a characteristic that telecommunications systems increasingly require as the need for scalable and robust networks increases. This has prompted the approach of a more distributed form of control in networks, and it has been an approach whose success can be seen in the rapid growth of the Internet. Another effort to implement a self-organising system in telecommunications is in the field of wireless networks. Work has been going on to develop self-organising, self-healing "ad-hoc" wireless networks where every node in such a system has sufficient intelligence to continuously sense and discover nearby nodes. Each node can dynamically determine the optimal path for forwarding data packets from itself hop by hop through the network to any other node in the network, and nodes can reconfigure themselves to heal any ruptures in the network.

Wireless ad-hoc networks are examples of self-organising systems, and possess several characteristics that are common to other self-organising systems. Self organising systems all work on the basis of some form of organisation or coordination on a system-wide (global) scale that arises due to the effects of the collective behaviour of the individual parts of the system, or its sub-systems. This global behaviour, also known as emergent behaviour, is not something that occurs because it is dictated by a single controlling entity, but because of the simple interactions between the sub-systems. An example of emergent behaviour in a self-organising system is the ability of the trading markets, where the price of a product will go through adjustments to eventually find the true value of the commodity. It is, however, difficult to predict the behaviour of such systems particularly if they are large and exposed to many different outside influences.

One such characteristic behaviour is the occurrence of self-organised criticality. Systems that are heavily loaded are observed to be prone to catastrophic failure when even slight perturbations are applied; for example, entire road networks that are operating at or near capacity can be easily knocked out due to a failure or delay in one small part of the network. Such criticality has also been observed in computer networks, as described in Huberman B.A., Lukose R.M., "Social Dilemmas and Internet Congestion", Science, vol 277, pp. 535-537, July 1997, and in Ohira T., Sawatari R., "Phase Transition in Computer Network Traffic Model", Physical Review E, vol. 58. 1998.

It is known from United States Patent US-A-5157709 to provide a method of allocating channels to base stations in a telecommunications network for communications with mobile user terminals, the method comprising measuring interference on each channel used by a respective base station, adding the measured interference value for that channel and base station to an interference record, allocating channels to the base stations for further communications dependent upon the recorded interference, in which the record is a matrix of total measured interference.

## Summary of the Invention

The present invention is characterised over the disclosure of US-A-5157709 in that the record is a matrix of total measured interference for each combination of channel $k$ and base station $j$ used, in which the matrix $a_{jk}$, contains the total measured interference when a base station $j$ uses a channel $k$, and follows $a_{jkt} = a_{jk(t-1)} + I_{jkt}$ where $a_{jkt}$ is the matrix $a_{jk}$ at time t, $a_{jk(t-1)}$ is the matrix $a_{jk}$ at earlier time t-1, and $I_{jkt}$ is the interference measured by the base station $j$ on the channel $k$ at time $t$.

Preferred embodiments relate to a self-organising channel allocation scheme for a wireless network; more specifically a decentralized self-organizing channel allocation method for a cellular wireless network. More specifically, preferred embodiments involve a distributed dynamic frequency channel allocation scheme for a wireless network using measures of normalized accumulated interference at each base station. Preferred embodiments of the present invention have advantages of scalability; because the control is localized and distributed, the algorithm is able to handle a large network. Preferred embodiments of the present invention have advantages of flexibility; the addition and removal of base stations in the network would not require any changes to the configuration of the other base stations in the network. Preferred embodiments of the present invention have advantages of robustness; the decentralized nature of the algorithm enables the algorithm to function even if parts of the network fail.

Preferably the communications are call connections.

Preferably for call connection with a mobile user terminal, the base station having that mobile user terminal in its cell is allocated the channel having the lowest recorded total interference among those channels available to the base station.

The present invention also provides a telecommunications network comprising base stations for communications with mobile user terminals, the base stations being operative to measuring interference on each channel they use, and the network further comprising a base station controller connected to the base stations and operative to record the measured interference values for each combination of channel and base station used in an interference record and to allocate channels to the base stations for further communications dependent upon the recorded interference, in which the record is a matrix of total measured interference, characterised in that the record is a matrix of total measured interference for each combination of channel and base station used, and in which the matrix $a_{jk}$, contains the total measured interference when a base station $j$ uses a channel $k$, and follows $a_{jkt} = a_{jk(t-1)} + I_{jkt}$ where $a_{jkt}$ is the matrix $a_{jk}$ at time t, $a_{jk(t-1)}$ is the matrix $a_{jk}$ at earlier time t-1, and $I_{jkt}$ is the interference experienced by the base station $j$ on the channel $k$ at time $t$.

Preferably said communications are call connections.

Preferably for call-connection with a mobile user terminal, the base station having that mobile user terminal in its cell is allocated by the base station controller the channel having the lowest recorded total interference among those channels available to the base station.

Furthermore preferably the network is a radio telecommunications network at least substantially in accordance with Universal Mobile Telecommunications System UMTS standards.

Furthermore preferably the channels are frequency channels. Each channel can be a (frequency-offset) uplink and downlink frequency pair.

## Brief Description of the Drawings

A preferred embodiment of the present invention will now be described by way of example and with reference to the drawings, in which:

Figure 1 is a diagram illustrating a mobile telecommunications network (showing one base station for simplicity), and

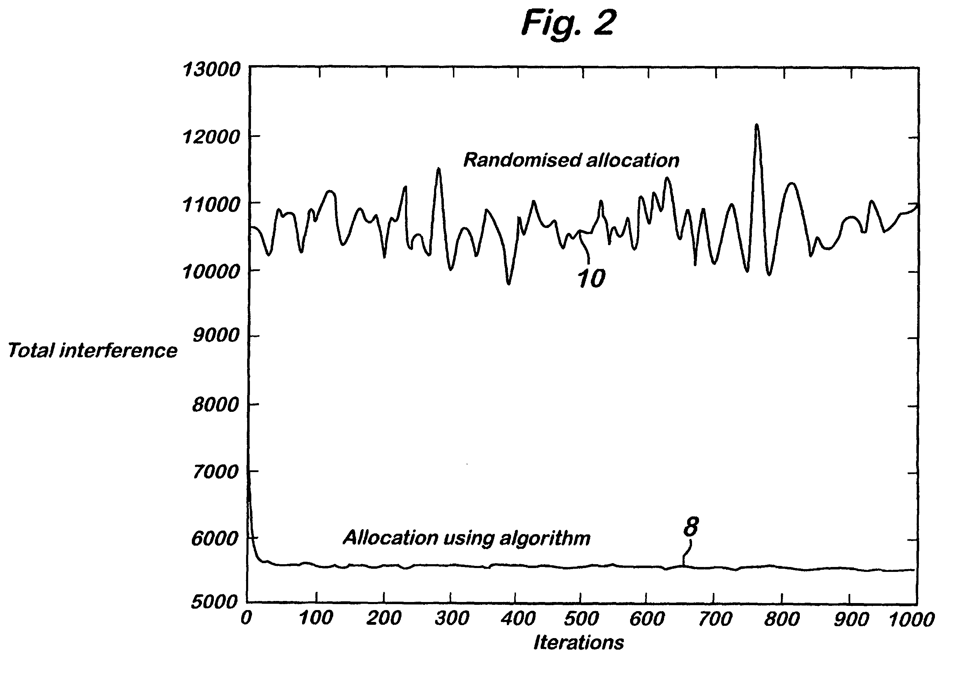

Figure 2 is a diagram illustrating results of simulations (performance comparison between random channel allocations and channel allocations according to the preferred method).

## Detailed Description

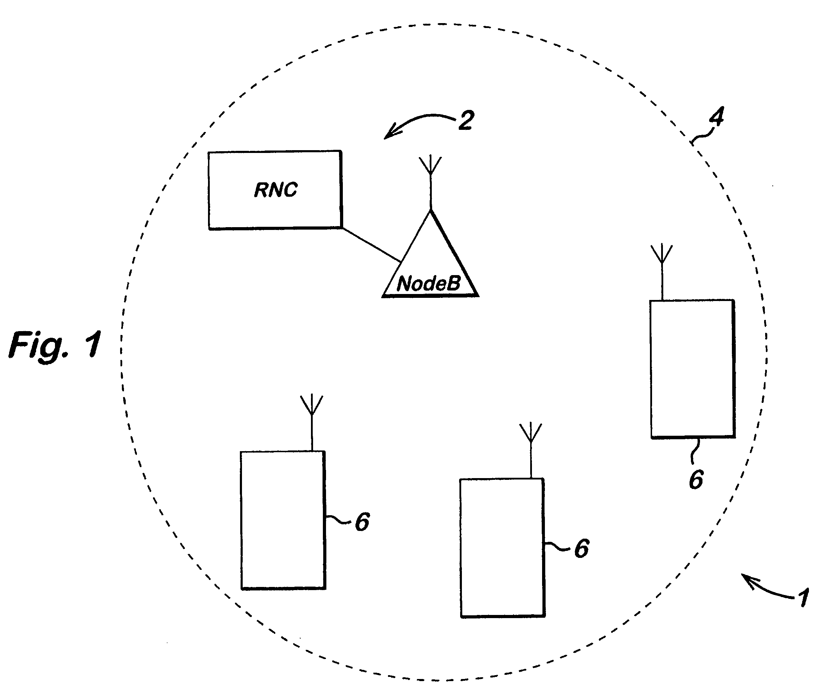

As shown in Figure 1, a mobile telecommunications network 1 includes base stations 2 (one of which is shown in Figure 1). In a Universal Mobile Telecommunications System UMTS network, the base station consists of a base transmitter-receiver station (NodeB in UMTS terminology) under the control of a so-called radio network controller RNC. Each base station 2 has an associated cell (i.e. area of coverage) in which it communicates with mobile user terminals 6. For each mobile user terminal 6 in call-connection with the base station 2, a channel is allocated for downlink communication (i. e from base station to mobile user terminal), and a channel is allocated for uplink communication (i.e. from mobile user terminal to base station).

The method works by allocating the channels based on the accumulated interference experienced by the cells to produce an allocation plan that reduces the amount of interference. In order to do this, a matrix recording the accumulated interference is built up. Each element in the matrix, $a_{jk}$, contains the accumulated interference experienced when cell $j$ uses channel $k$. The record of the accumulated interference is built up by updating the matrix over time according to:

$$a_{jkt} = a_{jk(t-1)} + I_{jkt}$$

where $I_{jkt}$ is the interference experienced by cell $j$ at channel $k$ at time $t$, i.e. the co-channel interference at cell $j$ caused by other cells (or mobiles) using the same channel $k$. (The co-channel interference fluctuates randomly in a normal distribution.).

During initialisation, the accumulated interference matrix $a$ is set to zero, and initially the channels are allocated randomly. The interference matrix, $I$, is generated based on the current channel allocation and the values for $a$ are updated. At the next time step after initialisation, a new channel allocation plan is now created not randomly but based on the accumulated interference. The channels are allocated to a cell starting from the one having the lowest accumulated interference, to the one with the highest, until the demand for channels in that cell is met. The steps of updating the accumulated interference matrix continue.

The matrix showing the various accumulated interference values for each frequency channel available to a base station can thus be considered as a priority list such that the channels are allocated so that the least amount of co-channel interference is obtained. The principle behind this is that there is a tendency towards producing a channel allocation plan that results in low interference once the accumulated interference matrix is built up sufficiently. The method is self learning in that it will initially try most or even all channel-cell pairings but eventually settle down to the best channel-cell pairings available. The method is able to cope with the dynamic nature of the network due to the fluctuations that are present in the signal interference, thus preventing the network from being stuck at one channel allocation once the network's conditions have changed.

By running a simulation model, results obtained showed that the method is able to find a channel allocation solution which reduces the interference in the network. In the simulation, 64 base stations were considered to be placed in an 8x8 grid, and 29 frequency channels were available to be shared among the base stations. The results which are shown in Figure 1 show how the accumulated interference 8 experienced by all the cells in the network decreased over time using the proposed method (as compared with the total interference 10 when a random channel allocation was used).

## Claims

1. A method of allocating channels to base stations (Node B) in a telecommunications network (1) for communications with mobile user terminals (6), the method comprising

measuring interference on each channel used by a respective base station,

adding the measured interference value for that channel and base station to an interference record,

allocating channels to the base stations for further communications dependent upon the recorded interference, in which the record is a matrix of total measured interference **characterised in that** the record is a matrix of total measured interference for each combination of channel $k$ and base station $j$ used, in which the matrix $a_{jk}$, contains the total measured interference when a base station $j$ uses a channel $k$, and follows $a_{jkt} = a_{jk(t-1)} + I_{jkt}$ where $a_{jkt}$ is the matrix $a_{jk}$ at time t, $a_{jk(t-1)}$ is the matrix $a_{jk}$ at earlier time t-1, and $I_{jkt}$ is the interference measured by the base station $j$ on the channel $k$ at time $t$.

2. A method according to claim 1 in which the communications are call connections.

3. A method according to claim 1 or claim 2, in which for call connection with a mobile user terminal, the base station having that mobile user terminal in its cell is allocated the channel having the lowest recorded total interference among those channels available to the base station.

4. A telecommunications network comprising base stations (Node B) for communications with mobile user terminals, the base stations being operative to measure interference on each channel they use, and the network (1) further comprising a base station controller (RNC) connected to the base stations and operative to record the measured interference values for each combination of channel and base station used in an interference record and to allocate channels to the base stations (Node B) for further communications dependent upon the recorded interference, in which the record is a matrix of total measured interference, **characterised in that** the record is a matrix of total measured interference for each combination of channel and base station used, and in which the matrix $a_{jk}$, contains the total

measured interference when a base station $j$ uses a channel $k$, and follows $a_{jkt} = a_{jk(t-1)} + I_{jkt}$ where $a_{jkt}$ is the matrix $a_{jk}$ at time t, $a_{jk(t-1)}$ is the matrix $a_{jk}$ at earlier time t-1, and $I_{jkt}$ is the interference experienced by the base station $j$ on the channel $k$ at time $t$.

5. A network according to claim 4 in which said communications are call connections.

6. A network according to claim 4 or claim 5, in which for call-connection with a mobile user terminal, the base station having that mobile user terminal in its cell is allocated by the base station controller the channel having the lowest recorded total interference among those channels available to the base station.

**Patentansprüche**

1. Verfahren zum Zuteilen von Kanälen zu einer Basisstation (Knoten B) in einem Telekommunikationsnetz (1) zur Kommunikation mit mobilen Benutzerendgeräten (6), mit folgenden Schritten:

Messen der Interferenz auf jedem durch eine jeweilige Basisstation benutzten Kanal,
Zufügen des gemessenen Interferenzwertes für diesen Kanal und diese Basisstation zu einer Interferenzaufzeichnung,
Zuteilen von Kanälen zu den Basisstationen für weitere Kommunikation in Abhängigkeit von der aufgezeichneten Interferenz, wobei die Aufzeichnung eine Matrix der gesamten gemessenen Interferenz ist, **dadurch gekennzeichnet, daß** die Aufzeichnung eine Matrix der gesamten gemessenen Interferenz für jede Kombination von benutztem Kanal $k$ und Basisstation $j$ ist, wobei die Matrix $a_{jk}$ die gesamte gemessene Interferenz enthält, wenn eine Basisstation $j$ einen Kanal $k$ benutzt, und $a_{jkt} = a_{jk(t-1)} + I_{jkt}$ folgt, wobei $a_{jkt}$ die Matrix $a_{jk}$ zur Zeit t, $a_{jk(t-1)}$ die Matrix $a_{jk}$ zur früherer Zeit t-1 und $I_{jkt}$ die durch die Basisstation $j$ auf dem Kanal $k$ zur Zeit $t$ gemessene Interferenz ist.

2. Verfahren nach Anspruch 1, wobei die Kommunikationen Rufverbindungen sind.

3. Verfahren nach Anspruch 1 oder Anspruch 2, wobei für die Rufverbindung mit einem mobilen Benutzerendgerät der Basisstation mit diesem mobilen Benutzerendgerät in ihrer Zelle der Kanal mit der niedrigsten aufgezeichneten Gesamtinterferenz unter den der Basisstation zur Verfügung stehenden Kanälen zugeteilt wird.

4. Telekommunikationsnetz mit Basisstationen (Knoten B) zur Kommunikation mit mobilen Benutzerendgeräten, wobei die Basisstationen das Messen von Interferenz auf jedem von ihnen benutzten Kanal bewirken und das Netz (1) weiterhin eine mit den Basisstationen verbundene Basisstationssteuerung (RNC) umfaßt und die Aufzeichnungen des gemessenen Interferenzwertes für jede Kombination von Kanal und Basisstation bewirkt, die in einer Interferenzaufzeichnung benutzt wird, und das Zuteilen von Kanälen zu den Basisstationen (Knoten B) für weitere Kommunikationen in Abhängigkeit von der aufgezeichneten Interferenz bewirkt, wobei die Aufzeichnung eine Matrix der gesamten gemessenen Interferenz ist, **dadurch gekennzeichnet, daß** die Aufzeichnung eine Matrix der gesamten gemessenen Interferenz für jede benutzte Kombination von Kanal und Basisstation ist und wobei die Matrix $a_{jk}$ die gesamte gemessene Interferenz enthält, wenn eine Basisstation $j$ einen Kanal $k$ benutzt und $a_{jkt} = a_{jk(t-1)} + I_{jkt}$ folgt, wobei $a_{jkt}$ die Matrix $a_{jk}$ zur Zeit $t$, $a_{jk}(t-1)$ die Matrix $a_{jk}$ zu einer früheren Zeit t-1 und $I_{jkt}$ die durch die Basisstation $j$ auf dem Kanal $k$ zur Zeit $t$ erfahrene Interferenz ist.

5. Netz nach Anspruch 4, wobei die Kommunikationen Rufverbindungen sind.

6. Netz nach Anspruch 4 oder Anspruch 5, wobei für eine Rufverbindung mit einem mobilen Benutzerendgerät der dieses mobile Benutzerendgerät in ihrer Zelle aufweisenden Basisstation von der Basisstationssteuerung der Kanal mit der geringsten aufgezeichneten Gesamtinterferenz unter den der Basisstation zur Verfügung stehenden Kanälen zugeteilt wird.

**Revendications**

1. Procédé d'attribution de canaux à des stations de base (Noeud B) dans un réseau de télécommunications (1) en vue de communications avec des terminaux utilisateurs mobiles (6), le procédé comprenant
la mesure du brouillage sur chaque canal utilisé par une station de base respective,
l'addition de la valeur de brouillage mesurée pour ce canal et cette station de base à un enregistrement de brouillage,
l'attribution de canaux aux stations de base en vue d'autres communications en fonction du brouillage enregistré, où l'enregistrement est une matrice du brouillage mesuré total **caractérisé en ce que** l'enregistrement est une matrice du brouillage mesuré total pour chaque combinaison de canal $k$ et de station de base $j$ utilisée, où la matrice $a_{jk}$ contient le brouillage mesuré total quand une station de base *j* utilise un canal *k,* et suit $a_{jkt} = a_{jk(t-1)} + I_{jkt}$ où $a_{jkt}$ est la matrice $a_{jk}$ au temps t, $a_{jk(t-1)}$ est la matrice $a_{jk}$ au temps antérieur t-1, et $I_{jkt}$ est le brouillage mesuré par la station de base *j* sur le canal *k* au temps *t.*

2. Procédé selon la revendication 1, dans lequel les communications sont des connexions d'appel.

3. Procédé selon la revendication 1 ou la revendication 2, dans lequel pour une connexion d'appel avec un terminal utilisateur mobile, la station de base ayant ce terminal utilisateur mobile dans sa cellule se voit attribuer le canal ayant le plus faible brouillage total enregistré entre les canaux à la disposition de la station de base.

4. Réseau de télécommunications comprenant des stations de base (Noeud B) en vue de communications avec des terminaux utilisateurs mobiles, les stations de base fonctionnant pour mesurer le brouillage sur chaque canal qu'elles utilisent, et le réseau (1) comprenant en outre un contrôleur de stations de base (RNC) relié aux stations de base et fonctionnant pour enregistrer les valeurs de brouillage mesurées pour chaque combinaison de canal et de station de base utilisée dans un enregistrement de brouillage et pour attribuer des canaux à des stations de base (Noeud B) en vue d'autres communications en fonction du brouillage enregistré, où l'enregistrement est une matrice du brouillage mesuré total **<u>caractérisé en ce que</u>** l'enregistrement est une matrice du brouillage mesuré total pour chaque combinaison de canal et de station de base utilisée, et où la matrice $a_{jk}$ contient le brouillage mesuré total quand une station de base *j* utilise un canal *k*, et suit $a_{jkt} = a_{jk(t-1)} + I_{jkt}$ où $a_{jkt}$ est la matrice $a_{jk}$ au temps t, $a_{jk(t-1)}$ est la matrice $a_{jk}$ au temps antérieur t-1, et $I_{jkt}$ est le brouillage subi par la station de base *j* sur le canal *k* au temps *t.*

5. Réseau selon la revendication 4, dans lequel lesdites communications sont des connexions d'appel.

6. Réseau selon la revendication 4 ou la revendication 5, dans lequel pour une connexion d'appel avec un terminal utilisateur mobile, la station de base ayant ce terminal utilisateur mobile dans sa cellule se voit attribuer par le contrôleur de station de base le canal ayant le plus faible brouillage total enregistré entre les canaux à la disposition de la station de base.

**Fig. 1**

## Fig. 2